# EUROPÄISCHE PATENTSCHRIFT

(11) **EP 1 332 020 B1**
(45) Veröffentlichungstag und Bekanntmachung des Hinweises auf die Patenterteilung: **30.06.2004**
(21) Anmeldenummer: 01988640.7
(22) Anmeldetag: 17.10.2001
(51) Int. Cl.: B23Q 11/00

(54) **HANDWERKZEUGMASCHINE MIT EINER STAUBABSAUGEINRICHTUNG**
HAND TOOL COMPRISING A DUST SUCTION DEVICE
OUTIL A MAIN COMPORTANT UN DISPOSITIF D'ASPIRATION DES POUSSIERES

(30) Priorität: 28.10.2000 DE 10053582
(43) Veröffentlichungstag der Anmeldung: 06.08.2003
(73) Patentinhaber: ROBERT BOSCH GMBH, 70442 Stuttgart (DE)
(72) Erfinder: LAMPRECHT, Justus, D-72144 Dusslingen (DE); HECHT, Joachim, 71106 Magstadt (DE); JONAS, Stephan, 70195 Stuttgart (DE)
(86) Internationale Anmeldenummer: PCT/DE2001/003968
(87) Internationale Veröffentlichungsnummer: WO 2002/034462

(56) Entgegenhaltungen:
- EP-A- 0 470 046
- EP-A- 0 579 964
- GB-A- 2 247 852

## Beschreibung

### Stand der Technik

Die vorliegende Erfindung betrifft eine Handwerkzeugmaschine mit einer Staubabsaugvorrichtung, bestehend aus einem vom Motor der Handwerkzeugmaschine angetriebenen Gebläse, einem Staubauffangbehälter und einem Absaugkanal, wobei zwischen dem Gebläse, dem Absaugkanal und dem Staubauffangbehälter ein solcher Luftströmungsweg besteht, dass vom Gebläse Luft durch den Absaugkanal angesaugt und die im angesaugten Staubauffangbehälter befördert werden, wobei der mit dem Staubfilter ausgestattete Staubauffangbehälter im Luftströmungsweg zwischen dem Absaugkanal und dem Gebläse angeordnet ist.

Eine Handwerkzeugmaschine mit einer derartigen Staubabsaugeinrichtung ist aus der EP 579 964 A1 bekannt. Mit dieser Anordnung des Staubauffangbehälters zwischen dem Absaugkanal und dem Gebläse wird anders als z.B. bei der aus der DE 196 53 330 A1 bekannten Staubabsaugeinrichtung die mit Staubteilchen gefüllte Luft nicht über das Gebläse geführt, denn das Gebläse kann durch den mit relativ hoher Geschwindigkeit einfallenden Staub beschädigt werden. Bei der Staubabsaugeinrichtung der EP 579 964 A1 dient das Gebläse gleichzeitig als Lüfter zur Kühlung des Motors der Handwerkzeugmaschine. Da es durchaus zu Verstopfungen des Staubfilters kommen kann, besteht die Gefahr, dass dadurch nicht mehr genug Kühlluft über den Motor geführt wird.

Der Erfindung liegt die Aufgabe zugrunde, eine Handwerkzeugmaschine mit einer Staubabsaugeinrichtung der eingangs genannten Art anzugeben, welche mit einem möglichst geringen technischen Aufwand realisierbar, und möglichst verschleißarm ist und auch den Motor der Handwerkzeugmaschine stets mit ausreichender Kühlluft versorgt.

### Vorteile der Erfindung

Die genannte Aufgabe wird mit den Merkmalen des Anspruchs 1 dadurch gelöst, dass ein Luftkanal für das Gebläse vorgesehen ist, der dem Gebläse Luft zuführt, wenn das Gebläse einen durch eine Verstopfung des Staubfilters verursachten erhöhten Unterdruck erzeugt. Über einen zusätzlichen Luftkanal kann auch bei einem verstopften Staubfilter das Gebläse noch soviel Luft ansaugen, die für die Kühlung des Motors ausreicht.

Vorteilhafte Weiterbildungen der Erfindung gehen aus den Unteransprüchen hervor.

Der für die Motorkühlung vorgesehene Luftströmungsweg kann nicht nur dadurch erfolgen, dass die über den Staubauffangbehälter angesaugte Luft vor Eintritt in das Gebläse über den Motor geleitet wird, sondern auch dadurch, dass das Gebläse die über den Absaugkanal und den Staubauffangbehälter angesaugte Luft über den Motor ausbläst.

### Zeichnung

Anhand von in der Zeichnung dargestellten Ausführungsbeispielen wird nachfolgend die Erfindung näher erläutert.

Es zeigen:
Figur 1 eine teilweise aufgeschnittene Handwerkzeugmaschine mit einer ersten Variante eines den Motor kühlenden Luftstörmungsweges,
Figur 2 eine schematische Darstellung der Funktionsweise der Staubabsaugung und Motorkühlung gemäß der Variante nach Figur 1,
Figur 3 eine teilweise aufgeschnittene Handwerkzeugmaschine mit einer zweiten Variante eines Luftströmungsweges zur Motorkühlung und
Figur 4 eine schematische Darstellung der Funktionsweise einer Staubabsaugung und einer Motorkühlung gemäß der in Figur 1 dargestellten Variante.

### Beschreibung von Ausführungsbeispielen

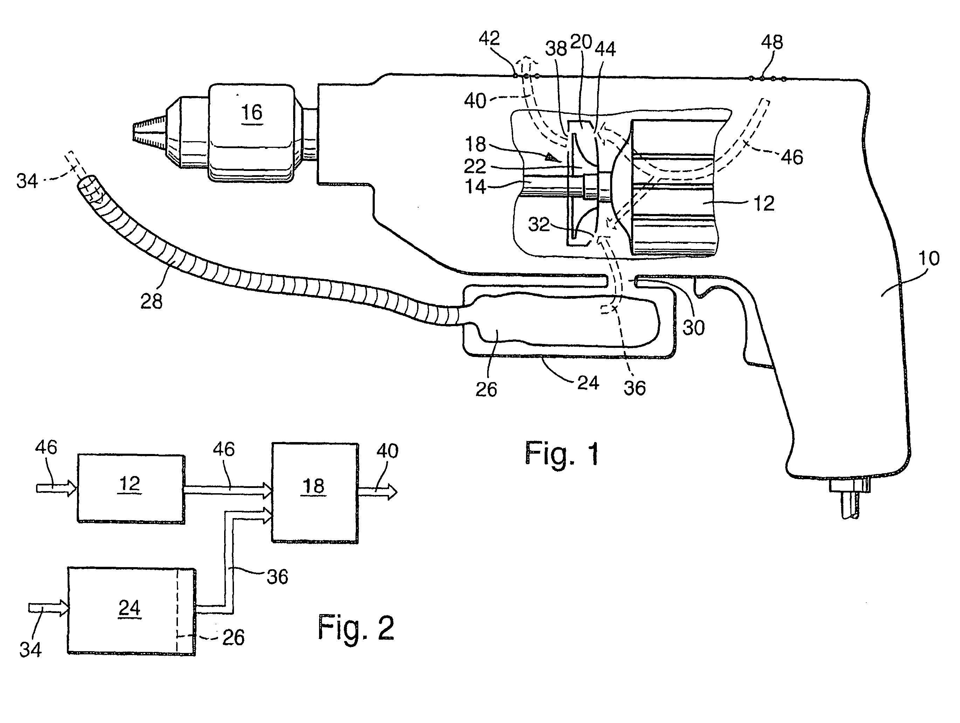

Die Figur 1 zeigt eine teilweise aufgeschnittene Handwerkzeugmaschine 10, z.B. einen Bohrhammer. Die nachfolgend beschriebene Erfindung bezieht sich aber auf jede Art von Handwerkzeugmaschinen, die einen drehenden Antrieb aufweisen und bei denen beim Bearbeiten eines Gegenstandes Staub entsteht.

Wie durch den Aufriss in der Figur 1 sichtbar, befindet sich in der Handwerkzeugmaschine 10 ein Motor 12 mit einer Antriebswelle 14 für ein in einen Werkzeughalter 16 der Handwerkzeugmaschine 10 eingesetztes Werkzeug (nicht dargestellt). Auf der Antriebswelle 14 ist ein Gebläse 18 montiert, das aus einer Gebläsekammer 20 und einem darin angeordneten und mit der Antriebswelle 14 gekoppelten Ventilator 22 besteht.

An der Außenseite der Werkzeugmaschine 10 befindet sich ein Staubauffangbehälter 24 mit einem als Staubfilter wirkenden Staubbeutel 26. In den Staubauffangbehälter 24 bzw. den Staubbeutel 26 mündet ein Absaugkanal 28, der bis in die Nähe des in die Handwerkzeugmaschine 10 eingesetzten Werkzeuges führt, dort wo während des Betriebes der Handwerkzeugmaschine 10 Staub entsteht. Zwischen dem Staubauffangbehälter 24 und dem Ventilator 22 des Gebläses 18 besteht eine luftführende Verbindung über eine gemeinsame Öffnung 30 im Staubauffangbehälter 24 und im Gehäuse der Handwerkzeugmaschine 10 und über eine Öffnung 32 in der Gebläsekammer 20 des Gebläses 18. Somit besteht ein Luftströmungsweg über den Absaugkanal 28 und den mit einem Filter 26 versehenen Staubauffangbehälter 24 bis in die Gebläsekammer 20.

Wird nun der Ventilator 22 bei Betrieb der Handwerkzeugmaschine 10 in Drehung versetzt und damit ein Unterdruck in der Gebläsekammer 20 erzeugt, so wird, wie durch den strichlierten Pfeil 34 angedeutet, die am Ort des Werkzeugs entstehende mit Staub gefüllte Luft über den Absaugkanal 28 in den Staubauffangbehälter 24 angesaugt. Der Luftstrom durchzieht den Staubbeutel 26, wird dabei von den Staubteilchen befreit und gelangt, wie durch den strichlierten Pfeil 36 angedeutet, anschließend in die Gebläsekammer 20. Durch eine Öffnung 38 an einer anderen Seite der Gebläsekammer 20 wird die angesaugte Luft, angedeutet durch den strichlierten Pfeil 40, aus der Gebläsekammer 20 herausgeblasen und gelangt durch ein oder mehrere Luftschlitze 42 im Gehäuse der Handwerkzeugmaschine 10 nach außen.

Durch ein oder mehrere dem Motor 12 zugewandte Öffnungen 32, 44 in der Gebläsekammer 20 wird ausserdem auch ein über den Motor 12 geführter Luftstrom, kenntlich gemacht durch den strichlierten Pfeil 46, angesaugt. Dieser Luftstrom 46 wird durch ein oder mehrere Luftschlitze 48 in der Gehäusewand der Handwerkzeugmaschine 10 von außen angesaugt. Der bzw. die Luftschlitze 48 sind relativ zum Motor 12 so platziert, dass sich ein solcher Luftströmungsweg über dem Motor 12 ergibt, der für eine optimale Kühlung des Motors 12 sorgt. Auch die über den Motor 12 angesaugte Luft wird aus der Gebläsekammer 20 über ein oder mehrere Öffnungen 38 an der gegenüberliegenden Seite der Gebläsekammer 20 durch den bzw. die Luftschlitze 42 in der Gehäusewand der Handwerkzeugmaschine 10 nach außen geblasen. Das Gebläse 18 erfüllt also gleichzeitig zwei Funktionen. Zum Einen die Staubabsaugung und zum Anderen die Motorkühlung.

Der Ventilator 22 in der Gebläsekammer 20 kann entweder direkt auf der Antriebswelle 14 des Motors 12 installiert sein oder über ein Getriebe mit einer höheren Übersetzung mit der Antriebswelle gekoppelt sein. Damit könnte der Ventilator 22 mit einer höheren Umdrehungszahl betrieben werden, um eine möglichst hohe Ansaugleistung zu erzielen. Die Ansaugleistung kann auch dadurch erhöht werden, dass mehrere Ventilatoren hintereinander angeordnet werden.

Abweichend von dem in der Figur 1 dargestellten Ausführungsbeispiel, bei dem sich der Staubauffangbehälter 24 außerhalb der Handwerkzeugmaschine 10 befindet, kann dieser Staubauffangbehälter auch in das Innere der Handwerkzeugmaschine 10 integriert werden.

Zu einer gezielteren Führung der Luftströme 36, 40, 46 und damit zu einer effektiveren Ansaugung bzw. Abführung der Luft können im Inneren der Handwerkzeugmaschine entsprechend konstruktiv ausgestaltete Kanäle vorgesehen werden.

Zur Verdeutlichung der einzelnen Luftströmungswege, die in der Handwerkzeugmaschine 10 gemäss Figur 1 auftreten, ist die der Figur 2 zu entnehmende schematische Darstellung gewählt. Die einzelnen Blöcke 12, 18, 24 entsprechen dem Motor 12, dem Gebläse 18 und dem Staubauffangbehälter 24 mit dem darin angeordneten, als Filter dienenden Staubbeutel 26. Die in der Figur 1 eingezeichneten Luftströme 34, 36, 42, 46 haben in der Figur 2 die gleichen Bezugszeichen. Die Figur 2 macht ersichtlich, dass in das Gebläse 18 zwei Luftströmungwege 36 und 46 führen, wobei der eine Luftströmungweg 36 durch den Staubauffangbehälter 24 und der andere Luftströmungsweg 46 über den Motor 12 führt.

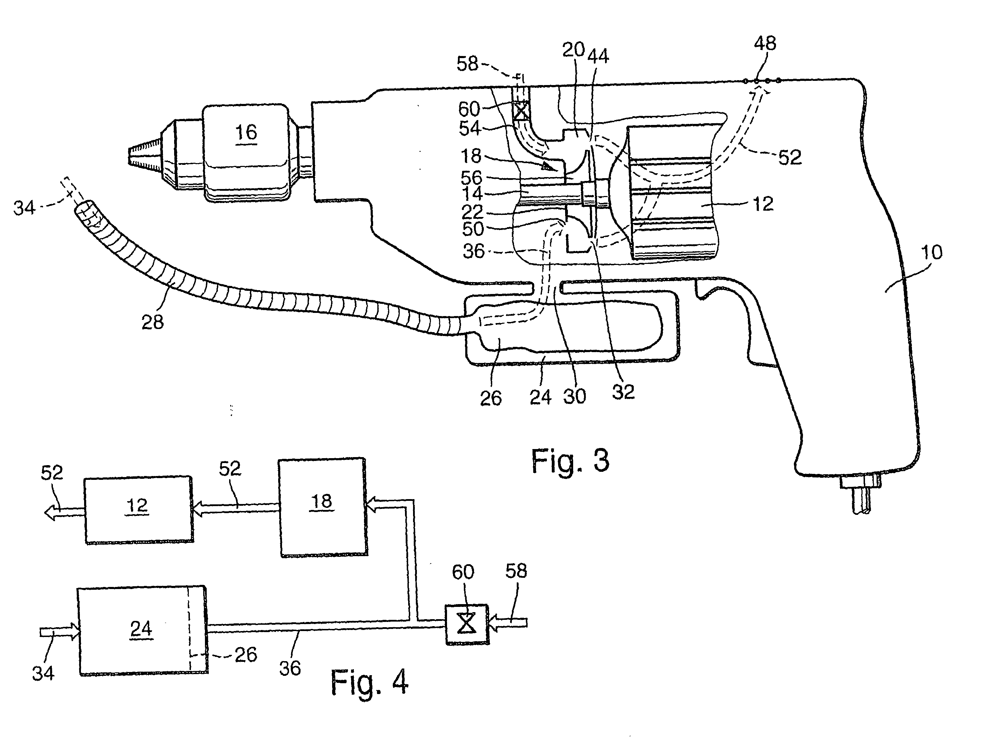

Die Figuren 3 und 4 zeigen ein weiteres Ausführungsbeispiel für eine Staubabsaugeinrichtung, welche gleichzeitig neben einer Staubabsaugung auch eine Motorkühlung durchführt. Solche Elemente in den Figuren 3 und 4, welche die gleiche Bedeutung und Funktionsweise wie Elemente in den Figuren 1 und 2 aufweisen, sind mit denselben in den Figuren 1 und 2 zu findenden Bezugszeichen versehen worden. Von einer wiederholten Beschreibung der in den Figuren 1 und 2 vorkommenden und vorangehend bereits beschriebenen Elemente wird im Zusammenhang mit den Figuren 3 und 4 abgesehen. Das in den Figuren 3 und 4 dargestellte Ausführungsbeispiel unterscheidet sich im Wesentlichen gegenüber dem Ausführungsbeispiel der Figuren 1 und 2 durch einen anders gearteten Luftströmungsweg zur Kühlung des Motors 12.

Der über den Absaugkanal 28 angesaugte und durch den als Filter wirkenden Staubbeutel 26 vom Staub befreite Luftstrom gelangt durch eine oder mehrere Öffnungen 50 in die Gebläsekammer 20. Aus der Gebläsekammer 20 wird die Luft wieder durch ein oder mehrere Öffnungen 32, 44 ausgeblasen, und zwar so, dass diese ausgeblasene Luft über den Motor 12 geführt wird und durch ein oder mehrere Luftschlitze 48 in der Gehäusewand der Handwerkzeugmaschine 10 nach außen gelangt. Dieser aus der Gebläsekammer 20 austretende und zur Kühlung des Motors 12 dienende Luftstrom ist in der Figur 3 als strichlierter Pfeil 52 dargestellt. Um den angesaugten Luftstrom 36 in den Kühlluftstrom 52 zu überführen, ist die Öffnung 50 an der dem Motor 12 und den Öffnungen 32, 44 gegenüberliegenden Seite der Gebläsekammer 20 angeordnet.

Es kann passieren, dass sich der Staubbeutel 26 mit Staub so zusetzt, dass der daraus austretende, vom Gebläse 18 angesaugte Luftstrom 36 nicht ausreicht, um einen für den Motor 12 ausreichend großen Kühlluftstrom 52 zu bilden. Für diesen Fall ist ein zusätzlicher Luftkanal 54 vorgesehen, der über eine Öffnung 56 in die Gebläsekammer 20 einmündet. Diese Öffnung 56 für den Luftkanal 54 befindet sich an derselben Seite wie die Öffnung 50 für den Luftstrom 36 aus dem Staubauffangbehälter 24. Der Luftkanal 54 führt aus dem Gehäuse der Handwerkzeugmaschine 10 heraus und bildet einen Zugang für einen Luftstrom 58, dargestellt als strichlierter Pfeil, von außerhalb der Handwerkzeugmaschine 10 in die Gebläsekammer 20. Der Luftstrom 58 in die Gebläsekammer 20 soll aber erst dann freigegeben werden, wenn der andere Luftstrom 36 aus dem Staubauffangbehälter 24 zu gering geworden ist, was sich durch eine Erhöhung des Unterdrucks in der Gebläsekammer 20 äußert. Deshalb ist im Luftkanal 54 ein Ventil 60 vorgesehen, das erst dann öffnet und die Ansaugung von Luft 58 zulässt, wenn in der Gebläsekammer 20 ein erhöhter Unterdruck entsteht. Auf diese Weise ist eine ausreichende Kühlung des Motors 12 selbst bei verstopftem Staubfilter möglich.

Die Doppelfunktion des Gebläses 18, nämlich einerseits die Staubabsaugung und andererseits die Motorkühlung soll anhand der schematischen Darstellung in der Figur 4 nochmals deutlich gemacht werden. In der Figur 4 werden dieselben Bezugszeichen verwendet wie für die entsprechenden in der Figur 3 dargestellten Elemente und Luftströme. Die Figur 4 macht deutlich, dass der über den Staubauffangbehälter 24 geführte und vom Staub befreite Luftstrom 36 durch das Gebläse 18 in einen Luftstrom 52 zur Kühlung des Motors 12 überführt wird. Außerdem ist in der Figur 4 der vom Ventil 60 gesteuerte Luftstrom 58 angedeutet, welcher den Luftstrom 36 aus dem Staubauffangbehälter 24 ergänzt bzw. ersetzt, wenn in der Gebläsekammer 20 ein gewisser Unterdruck auftritt, der auf eine Verstopfung des Staubbeutels 26 zurückzuführen ist.

## Patentansprüche

1. Handwerkzeugmaschine mit einer Staubabsaugeinrichtung, bestehend aus einem vom Motor (12) der Handwerkzeugmaschine (10) angetriebenen, dem Motor (12) Kühlluft zuführenden, Gebläse (18), einem Staubauffangbehälter (24) und einem Absaugkanal (28), wobei zwischen dem Gebläse (18), dem Absaugkanal (28) und dem Staubauffangbehälter (24) ein solcher Luftströmungsweg besteht, dass vom Gebläse (18) Luft durch den Absaugkanal (28) angesaugt und die im angesaugten Luftstrom vorhandenen Staubteilchen in den Staubauffangbehälter (24) befördert werden, wobei der mit einem Staubfilter (26) ausgestattete Staubauffangbehälter (24) im Luftströmungsweg (34, 36) zwischen dem Absaugkanal (28) und dem Gebläse (18) angeordnet ist, **dadurch gekennzeichnet, dass** ein Luftkanal (54) für das Gebläse (18) vorgesehen ist, der im Gebläse (18) Luft zuführt, wenn das Gebläse (18) einen durch eine Verstopfung des Staubfilters (26) verursachten erhöhten Unterdruck erzeugt.

2. Handwerkzeugmaschine nach Anspruch 1, **dadurch gekennzeichnet, dass** das Gebläse (18) auf einem weiteren Luftströmungsweg (52) die über den Absaugkanal (28) und den Staubauffangbehälter (24) angesaugte Luft über den Motor (12) ausbläst.

3. Handwerkzeugmaschine nach Anspruch 1, **dadurch gekennzeichnet, dass** im Luftkanal (54) ein Ventil (60) angeordnet ist, das bei einem Unterdruck im Luftkanal (54) öffnet.

## Claims

1. Powered hand tool comprising a dust extraction arrangement, consisting of a blower (18) driven by the motor (12) of the powered hand tool (10) and feeding cooling air to the motor (12), of a dust-collecting container (24) and of a suction passage (28), there being such an air-flow path between the blower (18), the suction passage (28) and the dust-collecting container (24) that air is drawn in through the suction passage (28) by the blower (18) and the dust particles present in the drawn-in air flow are conveyed into the dust-collecting container (24), the dust-collecting container (24), equipped with a dust filter (26), being arranged in the air-flow path (34, 36) between the suction passage (28) and the blower (18), **characterized in that** an air passage (54) is provided for the blower (18), this air passage (54) feeding air in the blower (18) if the blower (18) produces an increased vacuum caused by an obstruction of the dust filter (26).

2. Powered hand tool according to Claim 1, **characterized in that** the blower (18), on a further air-flow path (52), blows out the air drawn in via the suction passage (28) and the dust-collecting container (24) over the motor (12).

3. Powered hand tool according to Claim 1, **characterized in that** a valve (60) is arranged in the air passage (54), and this valve (60) opens if there is a vacuum in the air passage (54).

## Revendications

1. Outil à main équipé d'un dispositif d'aspiration des poussières, composé d'un ventilateur (18) entraîné par le moteur (12) de l'outil à main (10) qui envoie de l'air de refroidissement au moteur (12), d'un réservoir collecteur de poussière (24) et d'un canal d'aspiration (28), dans lequel il s'établit entre le ventilateur (18), le canal d'aspiration (28) et le réservoir collecteur de poussière (24), un trajet d'écoulement d'air tel que de l'air soit aspiré par le ventilateur (18) en passant par le conduit d'aspiration (28) et que les particules de poussière présentent dans le flux d'air aspiré soient refoulées dans le réservoir collecteur de poussière (24), le réservoir collecteur de poussière (24) équipé d'un filtre à poussière (26), étant disposé sur le trajet de l'écoulement d'air (34, 36), entre le conduit d'aspiration (28) et le ventilateur (18),
**caractérisé en ce qu'**
un conduit d'air (54) prévu pour le ventilateur (18), achemine de l'air dans le ventilateur (18) lorsque le ventilateur (18) produit une dépression plus élevée provoquée par un colmatage du filtre à poussière (26).

2. Outil à main selon la revendication 1,
**caractérisé en ce que**
le ventilateur (18) souffle sur un autre trajet d'écoulement d'air (52) l'air aspiré par l'intermédiaire du conduit d'aspiration (28) et du réservoir collecteur de poussière (24) en le faisant passer sur le moteur (12).

3. Outil à main selon la revendication 1,
**caractérisé en ce que**
dans le conduit d'air (54), est disposée une soupape (60) qui s'ouvre dans le cas d'une dépression dans le conduit d'air (54).
